## Europäisches Patentamt
## European Patent Office
## Office européen des brevets

(19)

(11) Veröffentlichungsnummer : **0 019 050
B1**

(12) **EUROPÄISCHE PATENTSCHRIFT**

(45) Veröffentlichungstag der Patentschrift :
**09.03.83**

(21) Anmeldenummer : **80101303.8**

(22) Anmeldetag : **13.03.80**

(51) Int. Cl.³ : **G 03 B 21/64**

(54) **Diarahmen mit einem profilierten Randabschnitt.**

(30) Priorität : **21.03.79 DE 2911088**

(43) Veröffentlichungstag der Anmeldung :
**26.11.80 Patentblatt 80/24**

(45) Bekanntmachung des Hinweises auf die Patenterteilung : **09.03.83 Patentblatt 83/10**

(84) Benannte Vertragsstaaten :
**BE CH FR GB IT SE**

(56) Entgegenhaltungen :
**DE A 1 797 265
DE B 2 817 005
FR A 1 068 551**

(73) Patentinhaber : **AGFA-GEVAERT Aktiengesellschaft
D-5090 Leverkusen 1 (DE)**

(72) Erfinder : **Sylla, Jürgen
Amselweg 18
D-8029 Sauerlach-Arget (DE)**
Erfinder : **Neudecker, Karl
Heimgartenstrasse 4
D-8000 München 90 (DE)**

Jouve, 18, rue St-Denis, 75001 Paris, France

EP 0 019 050 B1

## Diarahmen mit einem profilierten Randabschnitt

Die Erfindung betrifft einen Diarahmen mit längs der Rahmenkanten vorgesehener profilierter Randabschnitte, die durch die Rahmenkante bildende Rippen, deren Dicke der Dicke des Rahmens entspricht, und dazu parallele, daran anschließende Nuten gebildet werden.

Durch die DE-OS 17 97 265 ist ein derartiger Diarahmen bekannt mit einem umlaufenden profilierten Randabschnitt, der aus einer nach einer Flachseite hin schmalen umlaufenden äußeren Rippe und nach beiden Flachseiten hin vorgesehenen breiteren Nuten und Rippen besteht, wobei die äußeren Rippen auch über die Eckbereiche verlaufen, die Nuten also nicht an den Seiten offen sind. Die Nuten dienen dabei lediglich der Materialeinsparung.

Die FR-PS 10 68 551 zeigt einen zweiteiligen Diarahmen, wobei in beiden Rahmenteilen an zueinander parallelen Seiten einander zugeordnete Rillen vorgesehen sind, in die Arme von die beiden Rahmenteile längs dieser Seiten zusammenhaltenden Klammern eingreifen. Um den Armen der Klammer eine ausreichende Federkraft zu geben, müssen die von den Klammern übergriffenen Randteile relativ breit sein, während die Rillen nur etwas breiter als die in sie eingreifenden Enden der Klammern zu sein brauchen.

Der Erfindung liegt die Aufgabe zugrunde, einen Diarahmen der eingangs genannten Art so auszubilden, daß er in Stapelprojektoren oder Diabetrachtern mit Schächten zur losen Stapelung der Dias verwendbar ist, ohne daß beim losen Stapeln die Rahmen sich miteinander verhaken können.

Diese Aufgabe wird erfindungsgemäß durch die Merkmale des Anspruchs 1) gelöst. Der Anspruch 2) enthält ein weiteres vorteilhaftes Merkmal.

Die Erfindung wird anhand von Zeichnungen näher erläutert. Es zeigen

Figur 1 eine Ansicht eines erfindungsgemäßen Diarahmens in Blickrichtung auf eine Flachseite,

Figur 2 eine Ansicht einer Kante des Diarahmens nach Fig. 1,

Figur 3 einen vergrößert dargestellten Schnitt durch den Diarahmen nach Fig. 1 gemäß der Schnittlinie III-III,

Figur 4 einen vergrößert dargestellten Schnitt durch den Diarahmen nach Fig. 1 gemäß der Schnittlinie IV-IV.

In den Figuren sind ein einen hochstehenden, umlaufenden Rand 1a aufweisendes Unterteil eines Diarahmens mit 1 und ein in das Unterteil 1 einzulegendes Oberteil mit 2 bezeichnet, wobei zwischen den beiden, je einen Bildausschnitt 1b, 2a aufweisenden Rahmenteilen 1, 2 ein zu rahmendes Diapositiv zu lagern ist. Es wäre aber grundsätzlich auch möglich, statt des als Ausführungsbeispiel gewählten zweiteiligen Diarahmens mit in das Unterteil eingelegtem Oberteil einen einteiligen Diarahmen oder einen aus zwei gleichen, miteinander verbundenen oder verbindbaren Halbschalen bestehenden Diarahmen vorzusehen, da die vorliegende Erfindung grundsätzlich auf jeden bekannten Diarahmentyp anwendbar ist.

Der Randabschnitt des Diarahmens 1, 2 ist längs aller vier Rahmenseiten, als Profilstück ausgebildet, das eine nicht bis in die Rahmenecken reichende Rippe 1c aufweist, deren Dicke d an der äußeren Rahmenkante etwa gleich der Dicke c des eigentlichen Diarahmens 1, 2 selbst ist. An die Rippe 1c schließen sich zum Rahmeninneren hin in die beiden Rahmenflachseiten reichende, zur Rippe 1c parallele Nuten 1d an, die sich bis in die Rahmenecken erstrecken, so daß die Dicke der Rahmenecken nur der zwischen den beiden Nuten 1d verbleibenden Rahmenstärke entspricht. Der Querschnitt des Profilstücks 1c, 1d im Rahmenrandbereich längs einer Rahmenseite hat also etwa T-förmigen Querschnitt, wobei die Nuten zur Verbesserung der Spritzbarkeit und der Verminderung eines Verhakens von Rippen eines Rahmens mit Nuten eines anderen Rahmens trapezförmigen Querschnitt haben können und die kürzere der parallelen Trapezseiten am Boden der Nut 1d liegt. Somit liegt die längere der parallelen Seiten des trapezförmigen Querschnitts der Nuten 1d in oder an den Oberflächen des Diarahmens 1, 2.

Um beim losen Stapeln der Rahmen 1, 2 zu verhindern, daß Rippen 1c eines Rahmens in Nuten 1d eines anderen Rahmens eingreifen und sich hierbei ineinander verhaken können, ist außerdem vorgesehen, daß die Breite der in den Rahmenoberflächen liegenden Rippenflächen mindestens gleich, vorzugsweise aber größer ist als die Breite der Nuten 1d an der Oberfläche des Diarahmens.

Liegen Diarahmen dieser Ausgestaltung in Stapeln flach aufeinander, so können die Rippen 1c eines Rahmens nicht in die Nuten 1d eines anderen Rahmens eingreifen, weil die Rippen breiter als die Nuten sind, so daß sich die Rahmen 1, 2 nicht ineinanderschieben oder verhaken können. Aber auch, wenn beim Einsetzen in Stapelbehälter oder beim Entnehmen der Rahmen hieraus ein Rahmen schräg mit einer seiner Rippen auf eine Nut eines anderen Rahmens trifft und insoweit die Rippe teilweise in die Nut eingreifen kann, ist ein Verhaken der Rahmen durch die Schrägflächen des trapezförmigen Profils der Nuten vermieden, an denen eine in eine Nut schräg eingreifende Rippe des schräg zugeführten Rahmens wieder herausgleitet.

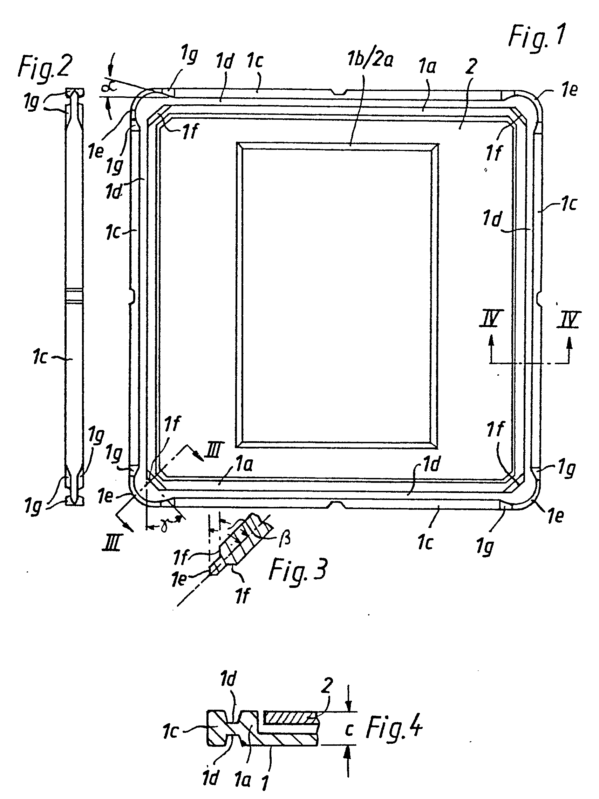

Eine weitere Besonderheit des Rahmens 1 besteht darin, daß seine Kanten im Bereich der verdünnten Ecken das Profil pfeilförmig nach außen weisender Spitzen 1e haben, vgl. Fig. 3, deren Schrägflächen vorzugsweise unter einem Winkel $\beta$ von 45° gegen die Rahmenmittelebene geneigt sind. Der Rand 1a ist im Bereich der Ecken unter einem Winkel $\gamma$ von 45° gegen die Rahmenseiten abgeschnitten, wie aus Fig. 1 ersichtlich ist. Dabei wird der Übergang vom Rand 1a zu den verdünnten Ecken ebenfalls durch pfeilförmig gegen die Rahmenecken verlaufende Schrägflächen 1f gebildet, wie Fig. 3 entnehmbar ist. Auch der Winkel zwischen den Schrägflächen 1f und der Rahmenmittelbahn beträgt vorzugsweise β gleich 45°. Schließlich wird der Übergang von den Rippen 1c zu den verdünnten Ecken durch Keil- oder Kegelflächen 1g gebildet, die einerseits trichterförmige Erweiterungen der Nuten 1d zu den Ecken hin unter einem Winkel α und andererseits Abschrägungen von den erhöhten Rippen 1c zu den verdünnten Ecken hin bilden.

Auch diese Abschrägungen 1e, 1f, 1g bewirken einerseits, daß beim Ineinanderschieben der verdünnten Ecken verschiedener Rahmen sich diese nicht verkanten oder verklemmen können. Vor allem aber wird hierdurch erreicht, daß beim Einsetzen eines Rahmens 1 in ein Magazin mit zu den Profilkanten 1c, 1d des Rahmens komplementären Rippen und Nuten durch die Schrägflächen 1e, 1f, 1g eine Ausrichtung der rahmenseitigen Rippen und Nuten auf die komplementären magazinseitigen Nuten und Rippen erfolgt, so daß der Rahmen 1, 1c, 1d, 1e, 1f, 1g leicht und ohne eine besondere Sorgfalt in ein zugeordnetes Magazin einsetzbar ist.

## Ansprüche

1. Diarahmen mit längs der Rahmenkanten vorgesehenen, profilierten Randabschnitten, die durch die Rahmenkante bildende Rippen, deren Dicke der Dicke des Rahmens entspricht, und dazu parallele, daran anschließende Nuten gebildet werden, gekennzeichnet durch die Kombination folgender Merkmale :

a) Die Rippen (1c) reichen nicht bis in die Rahmenecken, so daß die Nuten (1d) bis an die Rahmeneckkanten reichen, also an den Rahmenecken zum Einschieben in komplementäre Profilstücke von Diamagazinen offen sind,

b) Die Breite der an den Rahmenoberflächen liegenden Rippenteile (1c) ist gleich oder größer als die Breite der Nuten (1d) an den Rahmenoberflächen.

2. Diarahmen nach Anspruch 1, dadurch gekennzeichnet, daß die Rippen (1c) und die Nuten (1d) zu der zu den Rahmenflachseiten parallelen Rahmenmittelebene symmetrisch ausgebildet sind.

## Claims

1. A transparency frame with profiled edge sections provided along the frame edges, the edge sections being formed by ribs forming the frame edge, the thickness of the ribs corresponding to the thickness of the frame, and slots parallel and connected thereto, characterised by the combination of the following features :

a) the ribs (1c) do not extend to the frame corners so that the slots (1d) extend to the frame corner edges i. e. they are open at the frame corners for the insertion of complementary profile members of slide magazines,

b) the width of the rib parts (1c) lying on the frame surfaces is equal to or greater than the width of the grooves (1d) on the frame surfaces.

2. A transparency frame according to claim 1, characterized in that the ribs (1c) and the slots (1d) are constructed symmetrically with respect to the central plane of the frame parallel to the flat sides of the frame.

## Revendications

1. Cadre pour diapositive ayant, le long des arêtes du cadre, des sections marginales profilées qui sont constituées par les nervures qui forment les arêtes du cadre et dont l'épaisseur correspond à l'épaisseur du cadre, et par des gorges qui y sont parallèles et s'y raccordent, caractérisé par la combinaison des caractéristiques suivantes :

a) les nervures (1c) ne s'étendent pas jusqu'aux sommets du cadre, de sorte que les gorges (1d) s'étendent jusqu'aux arêtes des sommets du cadre, et sont donc ouvertes aux sommets du cadre pour l'introduction dans des pièces profilées complémentaires de magasins de diapositives,

b) la largeur des parties des nervures (1c) situées sur les surfaces du cadre est égale ou supérieure à la largeur des gorges (1d) sur les surfaces du cadre.

2. Cadre pour diapositive suivant la revendication 1, caractérisé en ce que les nervures (1c) et les gorges (1d) sont formées symétriquement par rapport au plan médian du cadre qui est parallèle aux côtés plats du cadre.

*Fig.1*

*Fig.2*

*Fig.3*

*Fig.4*